# EUROPEAN PATENT SPECIFICATION

(11) **EP 2 998 239 B1**
(45) Date of publication and mention of the grant of the patent: **13.09.2017**
(21) Application number: 15188616.5
(22) Date of filing: 25.05.2010
(51) Int. Cl.: B65D 77/20, B29C 49/24

(54) **TRAY, HERMETICALLY SEALED CONTAINER AND METHOD OF PRODUCING THEREOF**
SCHALE, HERMETISCH ABGEDICHTETER BEHÄLTER UND VERFAHREN ZU DEREN HERSTELLUNG
BARQUETTE, RÉCIPIENT HERMÉTIQUEMENT FERMÉ ET LEUR PROCÉDÉ DE PRODUCTION

(30) Priority: 26.05.2009 US 180943 P
(43) Date of publication of application: 23.03.2016
(62) Divisional of application: 10721072.6
(73) Proprietor: WestRock MWV, LLC, Norcross GA 30071 (US)
(72) Inventor: PARKS, Christopher J., Ellicott City, Maryland 21042 (US); CALVERT, Barry G., Covington, Virginia 24426 (US)
(74) Representative: Coulson, Elizabeth Eve

(56) References cited:
- EP-A2- 1 092 647
- WO-A1-01/39968
- US-A- 4 337 116
- US-A- 4 456 164
- US-A- 5 009 939
- US-A- 5 866 172
- US-A- 6 033 758

## Description

### BACKGROUND OF THE DISCLOSURE

To preserve products such as fresh foods, it is desirable to package these products in air-tight or hermetically sealed containers. This prevents the ingress of gasses, liquids and solids that could otherwise degrade or spoil the products. Such packaging containers typically comprise a thermoformed tray made of plastic polymer and a lid made of heat-sealable plastic film, wherein the plastic polymer contributes to both barrier and structural properties of the finished container. Paperboard has been widely used as a packaging material due to its low cost and biodegradability. However, paperboard has poor barrier properties and requires at least one barrier layer to impart barrier performance.

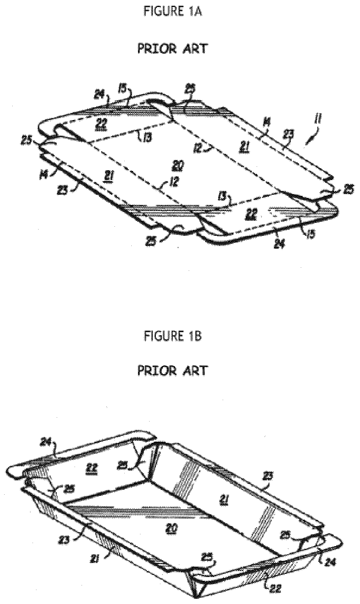

U.S. Patent No. 5,009,939 discloses a gas-tight container made of a folded paperboard structure that is blow-molded with a barrier film. The paperboard blank with scored fold lines (as shown in FIG. 1A) is folded and erected into a container structure. Then, the formed container is secured by bonding the overlapped flaps of the blank (as shown in FIG. 1B). Subsequently, the folded container structure is inserted into a molding element of a blow-molding machine, wherein a thermoplastic polymer structure is blow-molded and deposited seamlessly and creaselessly onto the container structure. The resulting composite container is then filled with the products to be packaged, and a sealing film is sealed to the flange edge of the container to preserve the products therein. Although these composite containers exhibit satisfactory sealing and barrier properties, their uses for hermetic packaging applications still need significant improvement from the packaging performance aspect, as well as from the efficiency and practicality of production process aspect. For the packaging performance aspect, the container structure formed from folding of paperboard blank contains many overlapped seams that prevent the complete sealing which is a critical requirement for hermetic packaging applications. For the production process aspect, a proper insertion of the folded container structure into the molding element and retention of the folded container structure once disposed within the molding element are needed for effective production and these requirements demand substantial supervision.

UK Patent Application No. GB 2 115 770A discloses a gas-impermeable container comprising a molded rigid porous tray having a gas-impermeable composite plastic coherently bonded to the inner surface of the tray, and a lid comprising a gas-impermeable composite plastic secured around the rim of the container. The gas-impermeable composite plastic comprises of three layers: a layer made of gas-impermeable thermoplastic polymer sandwiched between two layers of ionomeric polymeric materials. The gas-impermeable composite plastic is coated onto the inner surface of the tray by drawing-down or vacuum-forming techniques.

Another known container suggested for hermetically sealed or gas-tight applications utilizes a paperboard sheet that is pre-coated with a polymer film using an extrusion process. After being coated, the paperboard is then pressed to form a container structure. Such containers comprise creases or pleats, and in these regions, the polymer film of the pre-coated paperboard will follow the valleys of the creases or pleats and cause gaps or channels between sealing film and tray flange. This particular drawback is addressed in the U.S. Patent No. 6,651,874. A cardboard blank is first surface-coated with a gas barrier coating, and then the pre-coated blank is pressed into the tray cardboard structure. During the press forming process, the cardboard layer and the soft weld coating layer melt together by means of heat or friction so that the valleys of the creases or pleats on the pressed cardboard structure are smoothed out, allowing the cardboard and coating layers to be welded together in a gas-proof manner.

There is still a need for hermetically sealed containers with enhanced barrier and seal performances that may be produced by a process that is more effective and economical for the in-plant system.

### SUMMARY OF THE DISCLOSURE

According to a first aspect of the disclosure, for which protection is sought, there is provided a unitary tray component, comprising:
(a) a press-molded pre-shaped unitary tray structure having an interior surface, and including:
   (i) a base portion,
   (ii) a side wall portion extending upward from the base portion, and
   (iii) a flange portion extending peripherally from the side wall portion, the flange portion having manufacturing pleats or creases; and
(b) a composite polymer film blow-molded onto the base, side wall, and flange portion of the interior surface such that the composite polymer film is seamlessly, creaselessly and integrally bonded thereto for enabling a hermetic seal to be created between the pre-shaped unitary tray structure and a lid component.

According to a second aspect of the disclosure for which protection is sought, there is provided a hermetically sealed container, including:
(I) the unitary tray component according to the preceding paragraph; and
(II) a lid component hermetically sealed to the flange portion of the unitary tray component.

Optionally, in the unitary tray component referred to above or in the hermetically sealed container referred to above, the composite polymer film comprises four layers, beginning from closest to the interior surface of the tray structure, a tie layer, a low-density polyethylene (LDPE) layer, a tie layer, and a polyethylene terephthalate (PET) layer.

Optionally, in the unitary tray component referred to above or in the hermetically sealed container referred to above, the composite polymer film includes a polymer selected from a group consisting of PET, LDPE, nylon, EVOH, polypropylene, and combinations thereof.

Optionally, in the hermetically sealed container referred to above, the flange portion of the unitary tray component is further coated with a sealing film prior to being hermetically sealed with the lid component. The lid component may be made of a polymer including PET polymer.

Additionally, the hermetically sealed container may further include a top cover positioned over the lid component.

According to a third aspect of the disclosure for which protection is sought there is provided a method of producing a unitary tray component, comprising the steps of:
(1) providing a press-molded pre-shaped unitary tray structure having interior and exterior surfaces and an internal space to contain packaged goods, the pre-shaped structure including: a base portion, a side wall portion extending upward from the base portion, and a flange portion extending peripherally from the side wall portion, the flange portion having manufacturing pleats or creases;
(2) inserting the pre-shaped unitary structure into a blow mold cavity;
(3) extruding a blow mold parison of polymeric film into the blow mold cavity; and
(4) blowing the polymeric film against the base, side wall and flange portion of the interior surface of the unitary tray structure such that the composite polymer film is seamlessly, creaselessly and integrally bonded thereto for enabling a hermetic seal to be created between the pre-shaped unitary tray structure and a lid component.

According to a fourth aspect of the disclosure for which protection is sought there is provided a method of producing a hermetically sealed container, comprising steps of:
(1) producing a pre-shaped unitary tray component according to the method of the preceding paragraph; and
(2) hermetically sealing a lid component to the peripheral flange portion of the unitary tray component.

Optionally, the polymer film includes a polymer selected from a group consisting of PET, LDPE, nylon, EVOH, polypropylene, and combinations thereof.

Optionally, the lid component is made of a polymer including PET polymer. Optionally, the method further comprises a step of depositing a heat-sealable layer onto at least a portion of the flange portion of the coated unitary tray component prior to hermetically sealing the coated tray component with the lid component.

A hermetically sealed container is disclosed that may be produced by an effective and economical process for an in-plant system. The container comprises a coated unitary tray component having a base portion, a side wall portion, and a flange portion; and a lid component hermetically sealed to the flange portion of the tray component. A selected composite polymer film is blow-molded onto an interior surface of the pre-shaped unitary tray structure to provide the coated unitary tray component having its interior surface seamlessly, creaselessly and integrally bonded with the polymeric film.

### BRIEF DESCRIPTION OF THE DRAWINGS

FIG. 1A shows a pictorial view of the paperboard blank disclosed in the U.S. Patent No. 5,009,939
FIG. 1B shows a pictorial view of the fold-erected tray formed from the paperboard blank of FIG. 1A, as disclosed in the U.S. Patent No. 5,009,939;
FIG. 2A is a perspective view from the bottom and side views of one embodiment of the pre-shaped unitary tray structure showing base portion 18, side wall portions 16a and 14a, and flange portion 12; and
FIG. 2B is a close-up view of an inner side of the flange portion 12 shown in FIG. 2A.
FIG. 3 shows a schematic cross-section of one embodiment of the pre-shaped, coated unitary tray component;
FIG. 4 illustrates a schematic cross-section of one embodiment of the disclosed hermetically sealed container wherein the pre-shaped, coated unitary tray component is sealed with the lid component; and
FIG. 5 shows a schematic cross-section of one embodiment of the disclosed pre-shaped, coated unitary tray component.

### DETAILED DESCRIPTION OF THE DISCLOURE

The present disclosure now will be described more fully hereinafter, but not all embodiments of the disclosure are necessarily shown. While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof.

The hermetically sealed container of the present disclosure comprises:
(A) a coated unitary tray component, comprising:
   (a) a press-molded pre-shaped unitary tray structure having an interior and exterior surfaces, and including:
      (i) a base portion,
      (ii) a side wall portion extending upward from the base portion, and
      (iii) a flange portion extending peripherally from the side wall portion, the flange portion having manufacturing pleats or creases (C);
   (b) a composite polymer film blow-molded onto the interior surface of the tray structure such that the composite polymer film is seamlessly, creaselessly, and integrally bonded to the interior surface of the tray structure; and
(B) a lid component hermetically sealed to the flange portion of the coated unitary tray component.

The term "pre-shaped unitary tray structure" refers to a unitary and intact structure that, once formed, does not require any external influence to maintain the structure in its intact and usable state.

Various known packaging materials may be used for forming the pre-shaped unitary tray structure. Examples of such materials include, but are not limited to, paper, paperboard, cardboard, fiberboard, plastic, laminates, paper/plastic composites, polystyrene foam, polymeric foam, and aluminum. Furthermore, the packaging material may be pre-treated prior to formation of the unitary tray structure. For example, when paperboard is used for the pre-shaped unitary tray structure, the paperboard may be extrusion coated with a selected material before being formed into the tray structure. Alternatively, in some embodiments, the paperboard may be uncoated when being formed into the tray structure. In one exemplary embodiment, the unitary tray structure is formed from a clay-coated SBS (solid bleached sulphate) sheet of paperboard having an approximate thickness of 0.45mm (0.018"), with the clay-coated side providing the exterior surface of the tray and the non-coated side providing the interior surface of the tray.

It will be understood that in other embodiments of the present disclosure the nature and material properties of the packaging materials used for forming the pre-shaped unitary tray structure may be modified and optimized according to the end use applications of the hermetically sealed container. The thickness of the materials used for formation of the unitary tray structure may be varied depending on the end use and desired properties of the disclosed hermetically sealed container. For example, when paperboard is used for the pre-shaped unitary tray structure, the thickness of the paperboard may be selected to satisfy the rigidity and durability requirements of the final container. When desired, the paperboard with a thickness range of 250 micron (10 mils) and 750 micron (30 mils) may be used.

The disclosed containers may be in numerous shapes and formats. Examples of container shapes may include, but are not limited to, round shape, rectangular shape with round corner, elliptical shape, and oval shape.

The packaging material is formed into the pre-shaped unitary tray structure by a press-molding process. When desired, the pre-shaped unitary tray may be molded in a shape that comprises round or fillet corners rather than sharp creased joints.

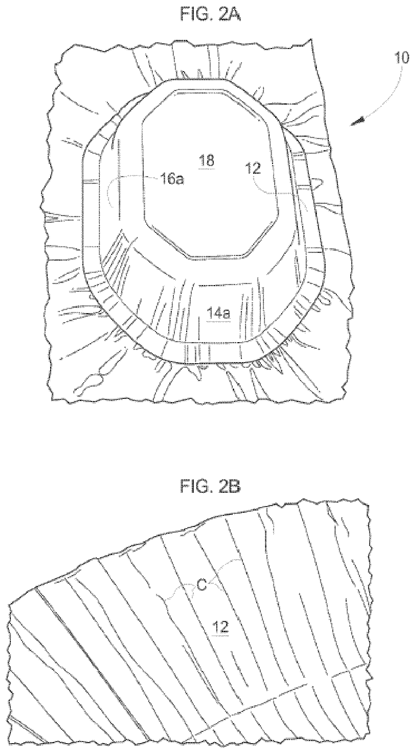

FIG. 2A illustrates one exemplary embodiment, shown from the bottom and side views, of the pre-shaped unitary tray structure formed from a press-molding process. The pre-shaped unitary tray structure 10 comprises a base portion 18, side wall portions 14 and 16 extending upward from the base portion 18, and a flange portion 12 extending peripherally from the side wall portions 14 and 16. In one exemplary embodiment, the transition between the base portion 18 and side wall portions 14 and 16, as viewed from the inside of the disclosed container, is a fillet. In one exemplary embodiment, the transition between the side wall portions 14 and 16 and the flange portion 12, as viewed from the inside of the container, is a radius or round. When desired, the transitions between the base portion 18, side wall portions 14 and 16, and flange portion 12 may be a round-shaped structure to further enhance the effective coating of the composite polymer layer 20 on to the pre-shaped unitary tray structure 10.

FIG. 2B shows the flange portion 12 of the pre-shaped unitary tray structure 10 in detail. The flange portion 12 comprises manufacturing pleats or creases 'C' that could represent a weakness in the hermetic sealability of the disclosed container. This weakness is minimized, if not completely eliminated, when the pre-shaped unitary tray structure 10 is effectively, seamlessly, creaselessly and integrally bonded with a selected composite polymer layer using the blow-molding process disclosed in the present application.

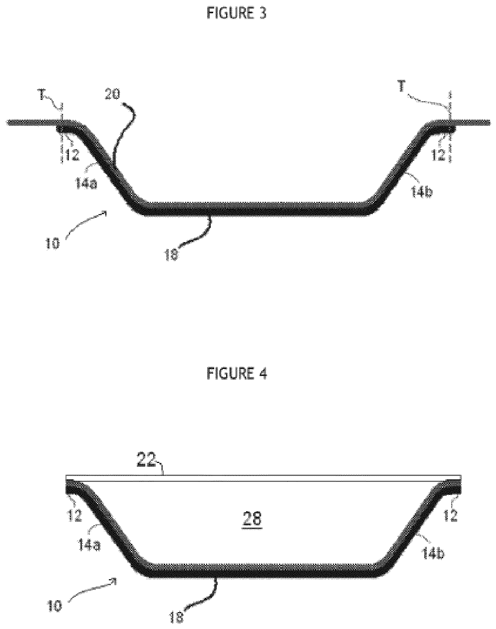

FIG. 3 illustrates one embodiment of the disclosed coated unitary tray component, shown as a cross-section view. The coated tray component comprises a pre-shaped unitary tray structure 10 having its interior surface blow-molded with a composite polymer film 20. The polymer film 20 is disposed onto the interior surface of the container 10 by a blow-molding process. The polymer film 20 may extend beyond the extent of the flanged portion 12 of the container. As illustrated, the polymer film 20 and optionally a portion of the flanged portion 12 may be trimmed at point 'T' to leave a clean-cut edge of the container. In this way, the polymer film coating 20 may be applied up to the very outermost edge of the flanged portion 12. FIG. 4 shows the coated unitary tray component 10 being hermetically sealed with a lid component 22.

Due to the blow-molding process of disposing the polymer film 20 onto the interior surface of the pre-shaped unitary tray structure 10, the thickness of polymer film 20 across the interior surface may not be uniform. For the purposes of hermetic sealing, it may be less important that the polymer film 20 is applied in a homogenous manner and more important that the polymer film covers the tray structure 10 in the areas where the tray structure 10 in itself is or will not be gas-tight once sealed. It is also important that the polymer film 20 covers the flange portion 12 for enabling a hermetic seal to be created between the tray structure and a lid component of sealing film 22. As shown in FIG 2B, many creases 'C' are present on the flange sealing portion 12 of the pre-shaped unitary tray structure 10. It is important that the polymer film 20 cover these creases in order to enable a hermetic seal to be formed.

In one embodiment, the composite polymer film 20 may be a co-extruded material and melted at an approximate temperature of 490° F for blow-molding onto the interior surface of the pre-shaped unitary tray structure 10. In other embodiments, rather than using a co-extruded polymer film 20; a composite polymer film 20 may be disposed onto the interior of the pre-shaped unitary tray structure 10 by sequentially blow-molding of one polymer layer after the others.

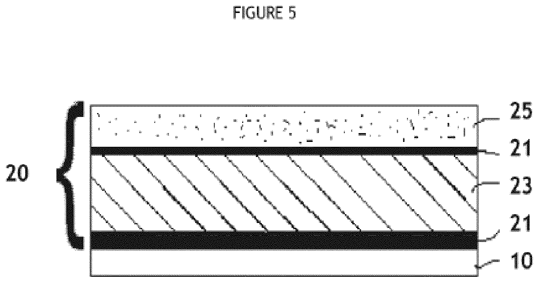

FIG. 5 shows one exemplary embodiment of the composite polymer film suitable for use to coat the interior surface of the pre-shaped unitary tray structure 10. The composite polymer film 20 comprises four layers, beginning from closest to the tray structure 10, these layers are: a tie layer 21, a low-density polyethylene (LDPE) layer 23, a tie layer 21, and a polyethylene terephthalate (PET) layer 25. In one embodiment, these layers (tie layer/LDPE/tie layer/PET) may make up approximately 10%, 50%, 5% and 35% of the polymer film composition. In one embodiment, the composite polymer layer may have a thickness of approximately 0.1 mm (4mils).

In other embodiments, the composite polymer film 20 may comprise any number of layers from a single layer to a multiple layer composition. If desired, a tie layer may be positioned between these polymer layers to aid adhesion of one polymer layer to another and to aid adhesion of one polymer layer to the pre-shaped unitary tray structure. When appropriated, the tie layer may offer an additional benefit in that it imparts a removable bond between the composite polymer film and the pre-shaped unitary tray structure such that the two parts may be separated for recycling purposes after use.

It will be understood that the composite polymer film for the interior coating of the unitary tray structure may be modified and optimized to accommodate the desired packaging performance. The composite polymer film may include a variety of polymers. Examples of these polymers include, but are not limited to, PET, LDPE, nylon, poly ethylene-vinyl alcohol copolymer (EVOH), polypropylene, and combinations thereof.

Various composite polymer films may be used in the disclosed hermetically sealed container. Examples of such composite polymer compositions include, but are not limited to, tie layer/PET; tie layer/LDPE/tie layer/PET; tie layer/ EVOH/tie layer/PET; tie layer/nylon/tie layer/PET; tie layer/LDPE/tie layer/EVOH/tie layer/PET; tie layer/LDPE/tie layer/nylon/tie layer/PET; tie layer/nylon/tie layer/EVOH/tie layer/PET; tie layer/EVOH/tie layer/nylon/tie layer/PET. When desired such as for the non-dual ovenable applications, polypropylene could be substituted for the PET in any of the exemplary compositions provided above.

After the composite polymer film is applied to the pre-shaped unitary tray structure and optionally after the trimming of the excess flange portion, the coated unitary tray component may be shipped to a converting plant where the coated unitary tray component may be loaded with articles to be packaged, such as fresh food-stuffs or personal care items. At the converting plant, a lid component 22 may be affixed to the coated flange portion of the coated unitary tray component. Several known techniques may be used to seal the lid component to the coated unitary tray component. Examples of such techniques include, but are limited to, adhesion bonding, mechanical fastening, or combinations thereof.

In one embodiment, the lid component may be adhered to the flange portion of the coated unitary tray component by a heat-sealing process. The lid component may be made of heat sealable materials. When desired, at least a flange portion of the coated unitary tray component may be additionally coated with heat sealable materials to further enhance the sealing performance.

In one exemplary embodiment, the lid component may be made of PET polymer. When desired, the lid component may be coated with heat-seal coating composition to enhance the sealing performance of the lid component and the unitary tray component. Examples of such coated films include, but are not limited to, Mylar® OL and Mylar® RL heat-sealable polymer films. Both exemplary heat-sealable polymer films are commercially available from DuPont - Teijin Films. In other embodiments of the disclosure, the lid component may be made of PET with additional barriers applied and with or without a heat seal coating applied. When appropriate such as for non dual-ovenable applications, non-PET sealing film may be used for the formation of the lid component. It will be understood that the selection of sealing film compositions for the lid component depends on package requirements. Many polymers and other plastics materials are known in the art for sealing performance, and the specific polymer materials listed in this specification are provided as examples only.

Once the lid component is applied to the loaded unitary tray component, a hermetically sealed package containing preserved article is produced. The exact nature of the seal created depends upon the application of the container. For food articles, it may be required that the unitary tray and the lid components impermeable to critical volumes of gases that could cause degradation of the packaged product within an unacceptable time scale. Throughout the present disclosure, the term "hermetic seal" is used to refer to any sufficiently leak-free or any sufficiently airtight seal that will offer suitable protection of the packaged products. As such, the terms "hermetic seal" and "hermetically sealable" are used to cover any perfect seal as well as any seal comprising microscopic leaks or imperfections that are small enough not to cause unsatisfactory degradation of the packaged products and are approximately of the same order of magnitude as the permeation through the packaging materials.

In one embodiment, the disclosed container further includes a top cover positioned over the lid component to impart rigidity and sturdiness to the lid component and consequently the disclosed container. The top cover may be made of a rigid or semi-rigid material. For example, the top cover may be made of paperboard. In one embodiment, the top cover may be adhered to the lid component by heal sealing process. When desired, heat sealable materials may be coated to at least the rim portion of the top cover to enhance the heat seal adhesion between the top cover and the lid component.

In one embodiment, the disclosed hermetically sealed container may be produced by a process comprising steps of:
(1) providing a press-molded pre-shaped unitary tray structure having an interior and exterior surfaces and an internal space to contain packaged goods, the pre-shaped structure including: a base portion, a side wall portion extending upward from the base portion, and a flange portion extending peripherally from the side wall portion, the flange portion having manufacturing pleats or creases (C);
(2) inserting the pre-shaped unitary structure against a blow mold cavity wall;
(3) extruding a blow mold parison of polymeric film into the blow mold cavity;
(4) blowing the polymeric film against the interior surface of the unitary tray structure to seamlessly, creaselessly, and integrally bond the polymeric film to the interior surface of the unitary tray structure creating a coated unitary tray component; and
(5) hermetically sealing a lid component to the peripheral flange portion of the coated unitary tray component.

When desired to further enhance the sealing performance, a layer of heat-sealable coating may be applied at least onto the flange portion of the coated unitary tray component prior to the hermetic sealing of the lid component.

It will be understood that the specific embodiment described represents only some examples of how the present disclosure may be put into effect. One skilled in the art will readily recognizes that many variations in the materials used, material combinations, material properties, as well as size and shape of container are possible.

It will be recognized that as used herein, directional references such as "top", "bottom", "front", "back", "end", "side", "inner", "outer", "upper" and "lower" do not limit the respective panels to such orientation, but merely serve to distinguish these panels of the container from one another.

While the disclosure has been described by reference to various specific embodiments, it should be understood that numerous changes may be made within the scope of the inventive concepts described. It is intended that the disclosure not be limited to the described embodiments, but will have full scope defined by the language of the following claims.

## Claims

1. A unitary tray component, comprising:
(a) a press-molded pre-shaped unitary tray structure (10) having an interior surface, and including:
(i) a base portion (18),
(ii) a side wall portion (14, 16) extending upward from the base portion, and
(iii) a flange portion (12) extending peripherally from the side wall portion, the flange portion having manufacturing pleats or creases (C); and
(b) a composite polymer film (20) blow-molded onto the base, side wall, and flange portion of the interior surface such that the composite polymer film is seamlessly, creaselessly and integrally bonded thereto for enabling a hermetic seal to be created between the pre-shaped unitary tray structure and a lid component.

2. A hermetically sealed container, including:
(I) the unitary tray component according to claim 1; and
(II) a lid component (22) hermetically sealed to the flange portion (12) of the unitary tray component.

3. The unitary tray component of Claim 1 or the hermetically sealed container of Claim 2, wherein the composite polymer film comprises four layers, beginning from closest to the interior surface of the tray structure, a tie layer (21), a low-density polyethylene (LDPE) layer (23), a tie layer (21), and a polyethylene terephthalate (PET) layer (25).

4. The unitary tray component of Claim 1 or the hermetically sealed container of Claim 2, wherein the composite polymer film includes a polymer selected from a group consisting of PET, LDPE, nylon, EVOH, polypropylene, and combinations thereof.

5. The hermetically sealed container of Claim 2, wherein the flange portion of the unitary tray component is further coated with a sealing film prior to being hermetically sealed with the lid component.

6. The hermetically sealed container of Claim 2, wherein the lid component is made of a polymer including PET polymer.

7. The hermetically sealed container of Claim 2, further including a top cover positioned over the lid component.

8. A method of producing a unitary tray component, comprising the steps of:
(1) providing a press-molded pre-shaped unitary tray structure having interior and exterior surfaces and an internal space to contain packaged goods, the pre-shaped structure including: a base portion, a side wall portion extending upward from the base portion, and a flange portion extending peripherally from the side wall portion, the flange portion having manufacturing pleats or creases (C);
(2) inserting the pre-shaped unitary structure into a blow mold cavity;
(3) extruding a blow mold parison of polymeric film into the blow mold cavity; and
(4) blowing the polymeric film against the base, side wall and flange portion of the interior surface of the unitary tray structure such that the composite polymer film is seamlessly, creaselessly and integrally bonded thereto for enabling a hermetic seal to be created between the pre-shaped unitary tray structure and a lid component.

9. A method of producing a hermetically sealed container, comprising steps of:
(1) producing a pre-shaped unitary tray component according to the method of claim 8; and
(2) hermetically sealing a lid component to the peripheral flange portion of the unitary tray component.

10. The method of Claim 8 or 9, wherein the polymer film includes a polymer selected from a group consisting of PET, LDPE, nylon, EVOH, polypropylene, and combinations thereof.

11. The method of Claim 8 or 9, wherein the lid component is made of a polymer including PET polymer.

12. The method of Claim 9, further comprising a step of depositing a heat-sealable layer onto at least a portion of the flange portion of the coated unitary tray component prior to hermetically sealing the coated tray component with the lid component.

## Patentansprüche

1. Einheitliche Schalenkomponente, umfassend:
(a) eine pressgeformte vorgeformte einheitliche Schalenstruktur (10) mit einer Innenfläche und mit:
(i) einem Bodenabschnitt (18),
(ii) einem Seitenwandabschnitt (14, 16), der sich von dem Bodenabschnitt nach oben erstreckt, und
(iii) einem Flanschabschnitt (12), der sich peripher von dem Seitenwandabschnitt erstreckt, wobei der Flanschabschnitt Herstellungsfalten oder Herstellerknitter (C) aufweist; und
(b) einen Polymerverbundfilm (20), die blasgeformt auf den Boden, die Seitenwand und den Flanschabschnitt der Innenfläche aufgebracht ist, derart, dass der Polymerverbundfilm nahtlos, knitterfrei und ganzheitlich damit verbunden ist, um eine hermetische Abdichtung zwischen der vorgeformten einheitlichen Schalenstruktur und einer Deckelkomponente zu ermöglichen.

2. Hermetisch abgedichteter Behälter, umfassend:
(I) die einheitliche Schalenkomponente nach Anspruch 1; und
(II) eine Deckelkomponente (22), die mit dem Flanschabschnitt (12) der einheitlichen Schalenkomponente hermetisch abgedichtet ist.

3. Einheitliche Schalenkomponente nach Anspruch 1 oder hermetisch abgedichteter Behälter nach Anspruch 2, wobei der Polymerverbundfilm vier Lagen umfasst, beginnend mit der der Innenfläche der Schalenstruktur nächstgelegenen Lage, nämlich eine Verbindungslage (21), eine Polyethylen-(LDPE)-Lage mit geringer Dichte (23), eine Verbindungslage (21) und eine Polyethylenterephthalat-(PET)-Lage (25).

4. Einheitliche Schalenkomponente nach Anspruch 1 oder hermetisch abgedichteter Behälter nach Anspruch 2, wobei der Polymerverbundfilm ein Polymer umfasst, ausgewählt aus einer Gruppe bestehend aus PET, LDPE, Nylon, EVOH, Polypropylen und Kombinationen davon.

5. Hermetisch abgedichteter Behälter nach Anspruch 2, wobei der Flanschabschnitt der einheitlichen Schalenkomponente ferner mit einem Abdichtungsfilm beschichtet wird, bevor er mit der Deckelkomponente hermetisch abgedichtet wird.

6. Hermetisch abgedichteter Behälter nach Anspruch 2, wobei die Deckelkomponente aus einem Polymer einschließlich eines PET-Polymers hergestellt ist.

7. Hermetisch abgedichteter Behälter nach Anspruch 2, der ferner eine obere Abdeckung aufweist, die über der Deckelkomponente positioniert ist.

8. Verfahren zum Herstellen einer einheitlichen Schalenkomponente, umfassend die Schritte:
(1) Bereitstellen einer pressgeformten vorgeformten einheitlichen Schalenstruktur mit Innen- und Außenflächen und einem Innenraum, um verpackte Waren zu enthalten, wobei die vorgeformte Struktur umfasst: einen Bodenabschnitt, einen Seitenwandabschnitt, der sich von dem Bodenabschnitt nach oben erstreckt, und einen Flanschabschnitt, der sich peripher von dem Seitenwandabschnitt erstreckt, wobei der Flanschabschnitt Herstellungsfalten oder Herstellungsknitter (C) aufweist;
(2) Einbringen der vorgeformten einheitlichen Struktur in einen Blasformhohlraum;
(3) Extrudieren eines Blasform-Vorformlings des Polymerfilms in den Blasformhohlraum; und
(4) Blasen des Polymerfilms gegen den Boden, die Seitenwand und den Flanschabschnitt der Innenfläche der einheitlichen Schalenstruktur, derart, dass der Polymerverbundfilm nahtlos, knitterfrei und ganzheitlich damit verbunden ist, um eine hermetische Abdichtung zwischen der vorgeformten einheitlichen Schalenstruktur und einer Deckelkomponente zu ermöglichen.

9. Verfahren zur Herstellung eines hermetisch abgedichteten Behälters, umfassend die Schritte:
(1) Herstellen einer vorgeformten einheitlichen Schalenkomponente nach dem Verfahren nach Anspruch 8; und
(2) hermetisches Abdichten einer Deckelkomponente an dem Umfangsflanschabschnitt der einheitlichen Schalenkomponente.

10. Verfahren nach Anspruch 8 oder 9, wobei der Polymerfilm ein Polymer umfasst, ausgewählt aus einer Gruppe bestehend aus PET, LDPE, Nylon, EVOH, Polypropylen und Kombinationen davon.

11. Verfahren nach Anspruch 8 oder 9, wobei die Deckelkomponente aus einem Polymer einschließlich eines PET-Polymers hergestellt ist.

12. Verfahren nach Anspruch 9, das ferner einen Schritt des Abscheidens einer heißsiegelbaren Schicht auf wenigstens einen Abschnitt des Flanschabschnitts der beschichteten einheitlichen Schalenkomponente vor dem hermetischen Abdichten der beschichteten Schalenkomponente mit der Deckelkomponente umfasst.

## Revendications

1. Elément formant barquette d'un seul tenant, comportant :
(a) une structure de barquette d'un seul tenant préformée moulée à la presse (10) ayant une surface intérieure, et comprenant :
(i) une partie formant fond (18),
(ii) une partie formant paroi latérale (14, 16) s'étendant vers le haut depuis la partie formant fond, et
(iii) une partie formant rebord (12) s'étendant sur le pourtour depuis la partie formant paroi latérale, la partie formant rebord ayant des soufflets ou des pliures de fabrication (C) ; et
(b) un film polymère composite (20) moulé par soufflage sur les parties formant fond, paroi latérale et rebord de la surface intérieure de telle sorte que le film polymère composite soit collé sur celles-ci sans soudures, sans pliures et d'une seule pièce pour permettre la création d'une fermeture hermétique entre la structure de barquette d'un seul tenant préformée et un élément formant couvercle.

2. Récipient fermé hermétiquement comportant :
(I) l'élément formant barquette d'un seul tenant selon la revendication 1 ; et
(II) un élément formant couvercle (22) hermétiquement fermé sur la partie formant rebord (12) de l'élément formant barquette d'un seul tenant.

3. Elément formant barquette d'un seul tenant selon la revendication 1 ou récipient fermé hermétiquement selon la revendication 2, dans lequel le film polymère composite comprend quatre couches, à savoir, en commençant par la plus proche de la surface intérieure de la structure de barquette, une couche de liaison (21), une couche de polyéthylène basse densité (LDPE) (23), une couche de liaison (21) et une couche de poly(téréphtalate d'éthylène) (PET) (25).

4. Elément formant barquette d'un seul tenant selon la revendication 1 ou récipient fermé hermétiquement selon la revendication 2, dans lequel le film polymère composite comprend un polymère choisi parmi un groupe constitué du PET, du LDPE, du Nylon, de l'EVOH, du polypropylène et de combinaisons de ceux-ci.

5. Récipient fermé hermétiquement selon la revendication 2, dans lequel la partie formant rebord de l'élément formant barquette d'un seul tenant est en outre revêtue d'un film d'étanchéité avant d'être hermétiquement fermée avec l'élément formant couvercle.

6. Récipient fermé hermétiquement selon la revendication 2, dans lequel l'élément formant couvercle est en polymère comprenant du PET.

7. Récipient fermé hermétiquement selon la revendication 2, comportant en outre un revêtement supérieur placé par-dessus l'élément formant couvercle.

8. Procédé de fabrication d'un élément formant barquette d'un seul tenant, comportant les étapes de :
(1) réalisation d'une structure de barquette d'un seul tenant préformée moulée à la presse ayant des surfaces intérieure et extérieure et un espace interne destiné à contenir des marchandises emballées, la structure préformée comprenant : une partie formant fond, une partie formant paroi latérale s'étendant vers le haut depuis la partie formant fond, et une partie formant rebord s'étendant sur le pourtour depuis la partie formant paroi latérale, la partie formant rebord ayant des soufflets ou des pliures de fabrication (C) ;
(2) insertion de la structure d'un seul tenant préformée dans une empreinte de moule de soufflage ;
(3) extrusion d'une paraison de film polymère de moule de soufflage dans l'empreinte de moule de soufflage ;
(4) soufflage du film polymère contre les parties formant fond, paroi latérale et rebord de la surface intérieure de la structure de barquette d'un seul tenant de telle sorte que le film polymère composite soit collé sur celles-ci sans soudures, sans pliures et d'une seule pièce pour permettre la création d'une fermeture hermétique entre la structure de barquette d'un seul tenant préformée et un élément formant couvercle.

9. Procédé de fabrication d'un récipient hermétiquement fermé, comportant les étapes de :
(1) fabrication d'un élément formant barquette préformée d'une seul tenant selon le procédé de la revendication 8 ; et
(2) fermeture hermétique d'un élément formant couvercle sur la partie formant rebord périphérique de l'élément formant barquette d'un seul tenant.

10. Procédé selon la revendication 8 ou 9, dans lequel le film polymère comprend un polymère choisi parmi un groupe constitué du PET, du LDPE, du Nylon, de l'EVOH, du polypropylène et de combinaisons de ceux-ci.

11. Procédé selon la revendication 8 ou 9, dans lequel l'élément formant couvercle est en polymère comprenant du PET

12. Procédé selon la revendication 9, comportant en outre une étape de dépôt une couche thermoscellable sur au moins une partie de la partie formant rebord de l'élément formant barquette d'un seul tenant à revêtement avant la fermeture hermétique de l'élément formant barquette à revêtement avec l'élément formant couvercle.
